# EUROPÄISCHE PATENTSCHRIFT

(11) **EP 1 215 519 B1**
(45) Veröffentlichungstag und Bekanntmachung des Hinweises auf die Patenterteilung: **08.09.2004**
(21) Anmeldenummer: 00127683.1
(22) Anmeldetag: 18.12.2000
(51) Int. Cl.: G02B 9/64, G02B 11/34, G02B 13/04

(54) **Projektionsobjektiv**
Projection objective
Objectif de projection

(43) Veröffentlichungstag der Anmeldung: 19.06.2002
(73) Patentinhaber: Optische Systeme Göttingen ISCO-Optic GmbH, 37081 Göttingen (DE); Reinecke, Wolfgang, Dr.-Ing., Ingenieurbüro für Optik-Entwicklung, 12489 Berlin (DE)
(72) Erfinder: Reinecke, Wolfgang, Dr.-Ing., D-15738 Zeuthen (DE); Linge, Horst Dr., D-34260 Kaufungen (DE)
(74) Vertreter: Quermann, Helmut, Dipl.-Ing.

(56) Entgegenhaltungen:
- EP-A- 0 548 529
- DE-A- 4 212 067
- US-A- 3 938 883
- US-A- 4 025 169
- US-A- 4 070 098
- US-A- 4 566 764
- US-A- 5 973 848
- US-A- 6 160 671

## Beschreibung

### Anwendungsgebiet:

Hauptanwendungsgebiet der Erfindung ist die Kinoprojektion, insbesondere die von 35mm Film.

### Charakteristik der bekannten technischen Lösungen und Problemstellung:

Die Erfindung betrifft ein lichtstarkes Projektionsobjektiv.

Objektive dieser Art allerdings mit 7 Linsen, sind bereits in der nachveröffentlichten europäischen Patentschrift EP 113 4606 der Anmelder beschrieben. Die Systemkonfiguration der dort aufgeführten Objektive ist nicht geeignet für Syteme mit kürzeren Brennweiten und damit für größere Bildfelder. Weitere Probleme bereiten die Einhaltung einer bestimmten Mindestschnittweite und Mindestbaulänge in Abhängigkeit des Bildwinkels, die auf Grund von Einbaubedingungen nicht unterschritten werden dürfen.

Systemtypen, die diesen Erfordernissen besser gerecht werden, ähneln denen typischer Weitwinkelobjektive mit inversem Teleaufbau. Derartige Systeme sind seit langem bekannt und in vielen Patentschriften beschrieben. Allen gemeinsam ist, daß die Blendenlage den Erfordernissen der Korrektion angepaßt und damit diesen Belangen untergeordnet ist. Die Bedingungen der Bündeigeometrie nach Anspruch 1 werden von allen diesen Systemen nicht erfüllt.

Im einzelnen lassen sich die Sytemtypen wie folgt gliedern und zusammenfassen:

In allen 7-linsigen Systemen der Schriften US 4537476, US 4468100, US 4176914, US 3874770, DE-OS 2551583, DE-AS 1472135 findet man den grundlegenden Systemaufbau wieder, der notwendig ist, um bei großer Öffnung und großen Feldem in Retrofokusbauweise eine gute Abbildungsqualität zu erreichen. Die erreichbare Abbildungsqualität ist für die hier geforderten Zielwerte (Kontrast bei 60LP/mm > 40% über das gesamte Bildfeld hinweg, Verzeichnung ≤1%) aber nicht ausreichend. Gleiches gilt auch noch für die 8-linsigen und 9-linsigen Systeme der Schriften DE-AS 2443319, DE-OS 2321864; US 4566764, US 3736049 die außerdem Kittglieder enthalten, die für den vorliegenden Anwendungszweck nicht zulässig sind.

In den Schriften DE-OS 2554963, DE-OS 2306346, DE-PS 2512797, DE-PS 2514081, DE-PS 2436444, DE-OS 2359156, DE-PS 2344224, DE-OS 2254586 werden modifizierte Systeme der erwähnten Grundtypen mit Linsenzahlen von 7 bis 12 Linsen beschrieben, bei denen auch vorzugsweise eine Fläche asphärisch ausgebildet ist.

Ähnliches gilt für Systeme in den Patentschriften US 5724195, US 5684643, US 5625497 und US 5477389 mit vorzugsweise asphärischen Flächen, Linsenzahlen von 7 bis 9 und extrem kleinen Brennweiten. Die hier formulierten Patentansprüche sind wesentlich allgemeiner gehalten, weil in den Ansprüchen zunächst nur zwischen einer vorderen und hinteren Baugruppe mit dazwischenliegender Blende unterschieden wird und nachfolgend eine bestimmte Anzahl von Bedingungsgleichungen aufgestellt wird. Diese Bedingungsgleichungen gelten jedoch nur in ihrer Gesamtheit, weil die Einzeibedingungen zum Teil Grundlage von Ansprüchen der genannten und anderer Patentschriften (wie z. B. DE-PS 2514081, entspricht US 4025169) sind. Ein Teil dieser Bedingungsgleichungen wird auch von der erfindungsgemäßen Systemkonfiguration erfüllt oder teilerfüllt. Dessen ungeachtet sind die Bedingungsgleichungen der Bündelgeometrie nach Anspruch 1 davon vollkommen unberührt.

Zusammengefaßt kann folgendes gesagt werden: Alle Systeme in den genannten Schriften erfüllen weder die Bedingungsgleichungen der Bündelgeometrie nach Anspruch 1 noch die Qualitätsanforderungen der hier nötigen Abbildungsgüte über das gesamte Bildfeld unter Berücksichtigung der Linsenanzahl. Außerdem sind diese Systeme teilweise vorzugsweise für asphärische Flächen sowie für Kittglieder ausgelegt. Beides ist für die erfindungsgemäße Systemkonfiguration ausgeschlossen.

### Ziel der Erfindung:

Ziel der Erfindung ist ein Objektiv bzw. eine Objektivserie, welches einerseits die effektivste Ausnutzung der Lichtstromverteilung über das gesamte Objektfeld nach Anspruch 1 erfüllt und andererseits eine Abbildungsqualität aufweist, die besser oder gleich der Abbildungsqualität der bekannten technischen Lösungen bei der Verwendung von technologisch günstigen Gläsem ist.

Darfegung des Wesens der Erfindung (Lösung und erreichte Vorteile):

Die Erfindung schlägt ein Projektionsobjektiv vor, das aus neun beiderseits an Luft angrenzenden Linsen aufgebaut ist, wobei folgende Bedingungen, die in ihrer Gesamtheit erfüllt sein müssen:
u≥12,8°,
100mm ≤LEP≤ 400mm,
σRBa ≥ 1°,
σRBi ≤ -14°,
wobei
- u: der Aperturwinkel (2u-Gesamtwinkel) beleuchtungsseitig,
- LEP: der Abstand der Eintrittspupile (beleuchtungsseitig) von der Objektebene (Lage in Projektionsrichtung vom Bezugspunkt Objektebene entspricht positivem Wert),
- σRBa: die Winkelneiung des Strahies gegenüber der optischen Achse im Objektraum zwischen Objekt und 1. Linsenfläche des Objektivs, der das Bündel für den Feldrand (äußerer Feldpunkt im Objekt) nach außen hin (von der optischen Achse weg, achsfern) begrenzt und
- σRBi: die Winkelneigung des Strahles gegenüber der optischen Achse im Objektraum zwischen Objekt und 1. Linsenfläche des Objektivs, der das Bündel für den Feldrand (äußerer Feldpunkt im Objekt) nach innen hin (zur optischen Achse, achsnah) begrenzt, ist,
sowie die Winkel σRBa und σRBi positiv sind, wenn die entsprechenden Strahlen die optische Achse an einem Ort schneiden, der vom Objekt aus gesehen in entgegengesetzter Projektionsrichtung liegt und negativ, wenn sie die optische Achse an einem Ort schnelden, der vom Objekt aus gesehen in der Projektionsrichtung liegt,
mit folgender Anordnung der Linsen in der Reihenfolge vom Bild (Vergrößerungsseite) zum Objekt (Verkleinerungs- und Beleuchtungs-Seite):
- eine erste negative, meniskenförmige Linse (1 ), mit der konvexen Fläche auf der Bildseite
- eine zweite negative, meniskenförmige Linse (2), mit der konvexen Fläche an der Bildseite,
- eine dritte positive Linse (3), mit einer konvexen Fläche auf der Objektseite,
- eine vierte positive, meniskusförmige Linse (4), mit einer konvexen Fläche an der Bildseite,
- eine fünfte negative Linse (5), mit einer konkaven Fläche auf der Objektseite,
- eine sechste bikonvexe Linse (6),
- eine siebte bikonkave Linse (7),
- eine achte positive Linse (8), mit einer konvexen Fläche an der Objektseite und
- eine neunte positive Linse (9), mit einer konvexen Fläche auf der Bildseite.

Weiterbildungen des erfindungsgemaßen Projektionsobjektivs sind in den unteransprüchen beschrieben.

Das erfindungsgemäße Objektiv zeichnet sich im Vergleich zu den vorgenannten Systemen (siehe unter Charakteristik der bekannten technischen Lösungen und Problemstellung) durch die Einhaltung aller Effektivitätsparameter zur Anpassung an die Kondensorsysteme und durch eine Verbesserung der Abbildungsqualität aus.

Nach Anspruch 1 genügt das erfindungsgemäße Objektiv den aufgestellten Bedingungsgleichungen, die die effektivste Anpassung an die Kondensorsysteme garantieren. Das Wesen diese Teils der Erfindung ist in der europäischen Patentschrift EP 113 4606 ausführlich beschrieben, so daß hier darauf nicht näher eingegangen wird.

Die Berechnung von Objektiven kürzerer Brennweiten bei Beibehaltung des Objektformates und damit für größere Bildwinkel wird nach der in der europäischen Patentschrift EP 113 4606 beschriebenen Systemkonfiguration immer schwieriger, weil der Astigmatismus und die Bildfeldwölbung im äußeren Teil des Bildfeldes nicht mehr ausreichend korrigierbar sind. Die astigmatische Differenz und die Bildfeldwölbung nehmen im Bereich von 3/4 des Bildfeldes unzulässige Werte an. Gleiches gilt für den Farbquerfehler und die Verzeichnung. Damit kann der ausgezeichnete Korrektionszustand dieser Systeme über das gesamte Bildfeld nicht mehr gehalten werden. Des weiteren gelingt es immer weniger die Forderungen, die die Einbaubedingungen dieser Systeme verlangen, zu erfüllen. Das gilt insbesondere für die Einhaltung einer bestimmten Mindestgröße für die letzte Schnittweite und die einer bestimmten Mindestbaulänge, die mit steigendem Bildwinkel größer wird. Aus diesen Gründen mußte der bisherige Objektivgrundtyp nach der europäischen Patentanmeldung weiterentwickelt und den neuen Verhältnissen angepaßt werden. Im Ergebnis dieser Entwicklung gelangt man zu typischen Weitwinkelobjektiven mit inversem Teleaufbau. Derartige Systemtypen sind in den genannten Schriften (siehe unter Charakteristik der bekannten technischen Lösungen und Pro_{bl}emstellung) in einer Vielzahl beschrieben. Sie erfüllen aber alle nicht die Bedingungen der Bündelgeometrie nach Anspruch 1. Die Entfernung der Eintrittspupille von der Objektebene ist vorzugsweise stets < 100mm und damit der Winkel σRBa weitgehend negativ. Desweiteren ist die Abbildungsqualität der Systeme in den genannten Schriften (siehe unter Charakteristik der bekannten technischen Lösungen und Problemstellung) mit bis zu 9 Linsen und zum Teil darüber hinaus für die hier geforderten Zielwerte (Kontrast bei 60LP/mm > 40% über das gesamte Bildfeld hinweg, Verzeichnung ≤1%) nicht ausreichend. Das ist vor allem auf die unzureichende Korrektion des Astigmatismus und der Bildfeldwölbung zurückzuführen.

In den Schriften DE-OS 2554963, DE-OS 2306346, DE-PS 2512797, DE-PS 2514081, DE-PS 2436444, DE-OS 2359156, DE-PS 2344224, DE-OS 2254586 sowie in den Patentschriften US 5724195, US 5684643, US 5625497 und US 5477389 werden modifizierte Systeme der erwähnten Grundtypen beschrieben. Diese unterscheiden sich im wesentlichen im mittleren Teil des Objektivaufbaues, während der vordere Teil vorzugsweise mit zwei negativen Menisken beginnt und der hin tere Teil vorzusweise mit der Brechkraftfolge (in der Reihenfolge vom Bild zum Objekt) einer negativen Linse und zwei positiven Linsen abschließt. Dieser vordere und hintere Teilaufbau ist im wesentlichen in allen Systemen zu finden. Bei dem erfindungsgemäßen System gelang es gegenüber den genannten, vorbekannten Systemen vor allem durch die anders geartete Gestaltung des mittleren Systemaufbaues (Linsen 3 bis Linse 6) und durch die spezielle Blendenlage sowie Verringerung der Vignettierung, die Einhaltung der Bedingungen der Bündelgeometrie nach Anspruch 1 und die notwendige Erhöhung der Abbildungsqualität zu erreichen. Auf diese Weise ist es mit dem erfindungsgemäßen System gelungen die patentrelevanten Eigenschaften des Objektivs der europäischen Patentschrift EP 113 4606 mit nur 2 zusätzlichen Unsen in einem beträchtlichem Ausmaß auf kürzere Brennweiten und damit größere Bildwinkel auszudehnen. So konnte die hervorragende Abbildungsgüte dieses genannten, vorbekannten Systems für das gleiche Öffnungsverhältnis von 1:1,9 über den gesamten neuen Brennweitenbereich beibehalten und zum Teil nochmals verbessert werden. Diese hervorragende Abbildungsqualität ist dabei unabhängig von der Krümmung der Bildfläche (leicht gekrümmt oder eben) erreichbar, wie in einem Beispiel noch näher gezeigt und erläutert wird.

Für die Fertigung einer brennweitenabgestuften Serie, die zur Abstimmung auf die Projektionsbedingungen nötig ist, bietet die weitgehende Verwendung gleicher Glassorten für äquivalente Linsen einen entscheidenden technologischen Vorteil. Darüber hinaus werden nur technologisch günstige, d.h. bearbeitungs- und kostengünstige Gläser verwandt.

Die bevorzugte Anwendung des erfindungsgemäßen Projektionsobjektivs ist die Verwendung des Objektivs für sich allein, d. h. ohne weitere Komponenten. Im Sinne der Erfindung ist es durchaus üblich, mit dem Projektionsobjektiv separate optische Komponenten zu kombinieren. Diese Komponenten können beispielsweise Objektivvorsätze oder Objektivzusätze sein, insbesondere Vorsätze für die Brennweitenvariation und anamorphotische Vorsätze für die Panorama-Breitbildprojektion. Es ist denkbar, Vorsätze mechanisch zu Integrieren.

### Ausführungsbeispiele:

### Vorbemerkung:

Die Schnittdarstellungen, die Strahlengänge und die Bewertung der Abbildungsqualität in allen nachfolgenden Figuren beziehen sich aus Zweckmäßigkeitsgründen auf eine gegenüber der Gebrauchslage als Projektionsobjektiv umgekehrte Lage (Abbildung von der Vergrößerungsseite nach der Vertdeinerungsseite). Die Eingangsschnittweite ist s=unendlich. Damit wird zwangsläufig das ursprüngliche Objekt zum Bild und umgekehrt. Im Sprachgebrauch wird auf diese Umkehr Bezug genommen. Davon ausgenommen ist die Pupillenabbildung (Gebrauchstagenorientierung). Darauf ist bei den nachfolgenden Ausführungen zu achten.

Für das lichtstarke Projektionsobjektiv mit gekrümmter Bildfläche nach Anspruch 3 wird gezeigt in Figur:
- 1.1a: Das Schnittbild des Systems mit der Numerierung der Linsen und der Stahlenverlauf in der meridionalen Ebene für die Abbildung verschiedener Objektpunkte. Die Blende ist zwischen den Linsen 5 und 6 angeordnet.
- 1.1b: Das Schnittbild des Systems mit dem Stahlenverlauf in der meridionalen Ebene für die Abbildung des äußersten Objektpunktes (Diagonale des Objektfeldes) und den charakteristischen Winkeln σRBa und σRBi mit den Werten: σRBa= 5,0° und σRBi=-17,5° für eine Eintrittspupillenlage von LEP=169,3mm.
- 1.2: Der Vignettierungsverlauf für die 3 Hauptfarben λ(d)=587,6nm, λ(C)=656,3nm und λ(F)=486,1nm mit den Wichtungen λ(d)=1, λ(C)=λ(F)=0,5 in Abhängigkeit des halben Bildwinkeis w (wmax=17,4°). Der minimale Wert der Vignettierung beträgt 80% und wird ganz wesentlich von dem Winkel σRBa mitbestimmt.
- 1.3: Die meridionale (Tan) und sagittale (Sag) Modulationsübertragungsfunktion MTF für die 3 Hauptfarben λ(d)=587,6nm, λ(C)=656,3nm und λ(F)=486,1nm mit den Wichtungen λ(d)=1, λ(C)=λ(F)=0,5 in Abhängigkeit des halben Bildwinkels w (wmax=17,4°) für die Ortsfrequenzen 60LP/mm, 30LP/mm und 15LP/mm. Der Vergleich zu den vorgenannten Lösungen (Europäische Patentschrift EP 113 4606) zeigt eine etwas bessere und ausgewogenere Abbildungsqualität über das gesamte Bildfeld hinweg. Das zeigt sich vor allem in der Kontraststeigerung auf der Achse bei den Ortsfrequenzen 60LP/mm und 30LP/mm und in den geringeren Unterschieden der meridionalen und sagittalen Kurvenverläufe im äußeren Feldbereich bei 60LP/mm.
- 1.4: Die Queraberrationen Δy'und Δx' für die 3 Hauptfarben in dem meridionalen (T) und sagittalen (S) Schnitt in Abhängigkeit des Eintrittspupillenradiusses pEP für die halben Bildwinkel w=0, w=0,25 x wmax, w=0,5 x wmax, w=0,75 x wmax als Parameter mit w= wmax=17,4°. Aus diesen Kurven wird das Korrektionsverhalten in Abhängigkeit von den Pupillen- und Feld-Koordinaten für diese 3 Wellenlängen ersichtlich. Sie bestätigen die sehr gute Abbildungsqualität über das gesamte Bildfeld, wie es bereits der Kurvenverlauf der Modulationsübertragungsfunktion zeigte und geben tiefere Einblikke in das Korrektionsverhalten des Systems. Sie zeigen außerdem die sehr gute axiale und laterale Farbkorrektion.
- 1.5: Der Astigmatismus für die 3 Hauptfarben in Abhängigkeit vom halben Bildwinkel (w= wmax=17,4). Es zeigt sich der etwas günstigere Verlauf der Bildschalen gegenüber der vorgenannten Lösung (Europäische Patentschrift EP 113 4606).
- 1.6: Die Verzeichnung für die 3 Hauptfarben in Abhängigkeit vom halben Bildwinkel (w= wmax=17,4). Die Verzeichnung erreicht am Bildrand eine maximale Abweichung von 1,0%.

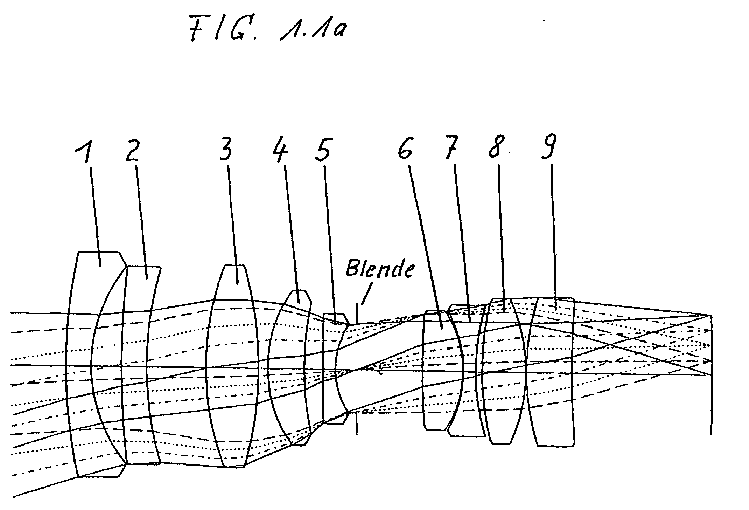

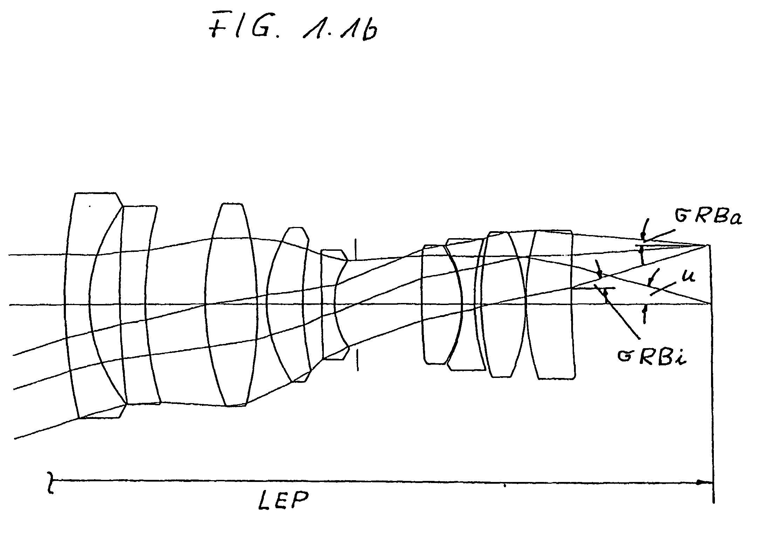

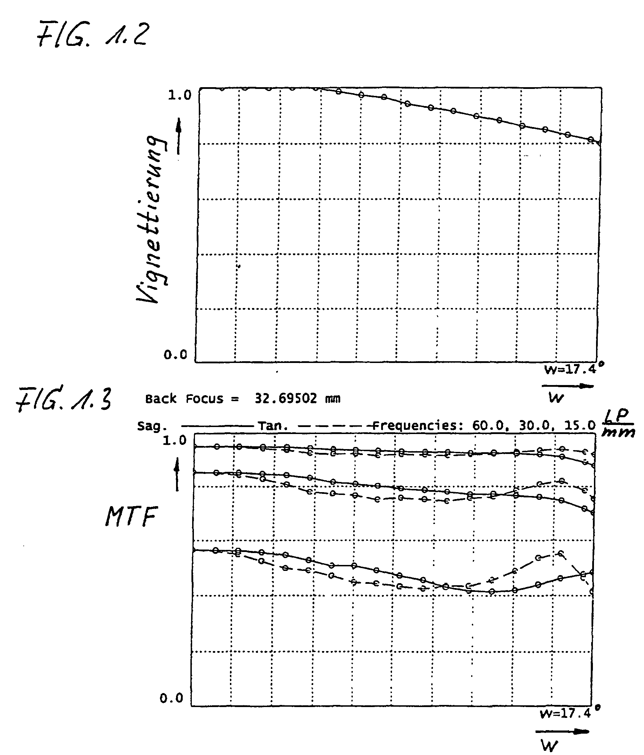

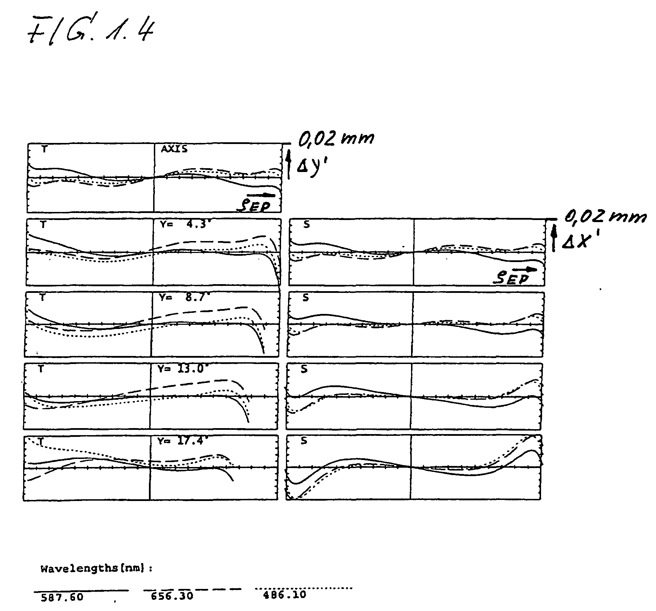

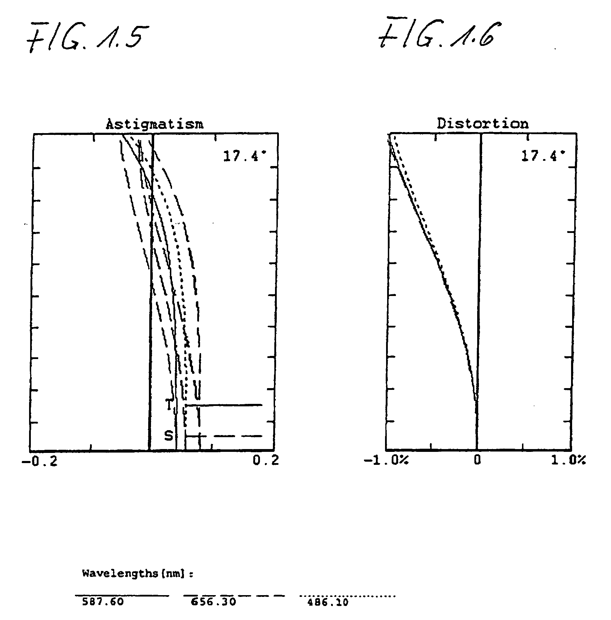

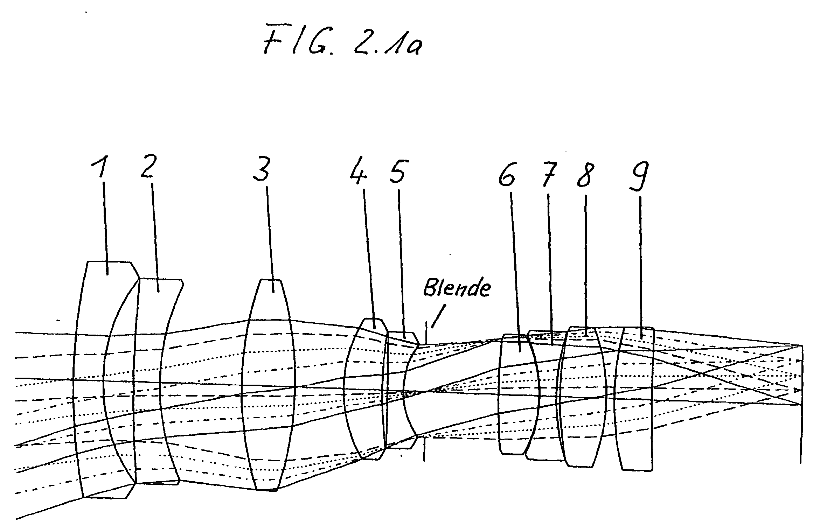

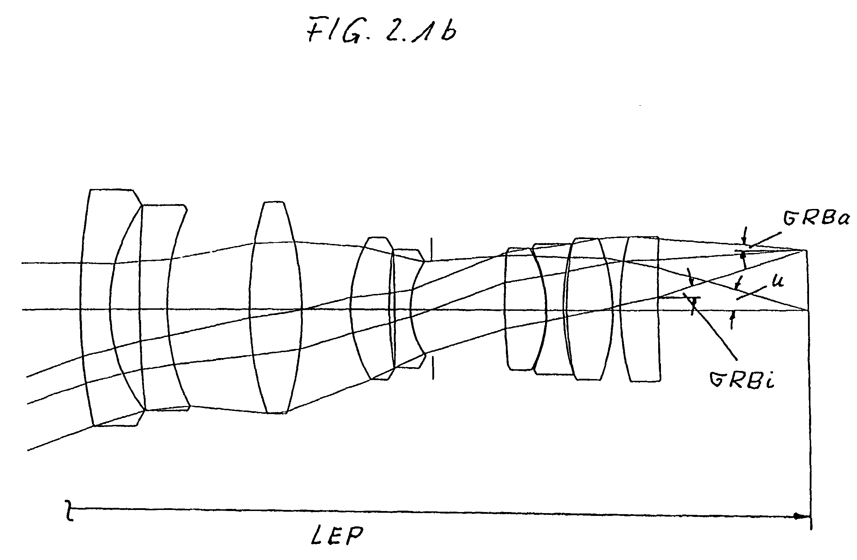

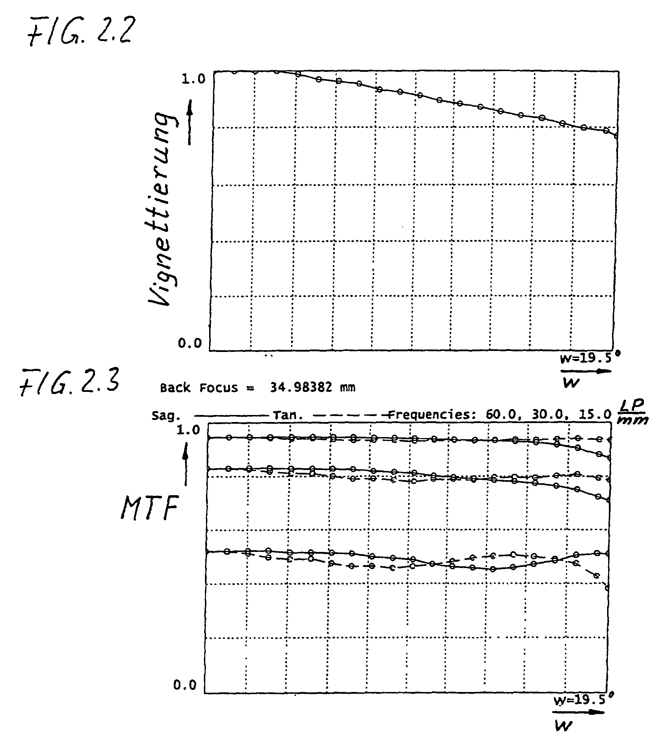

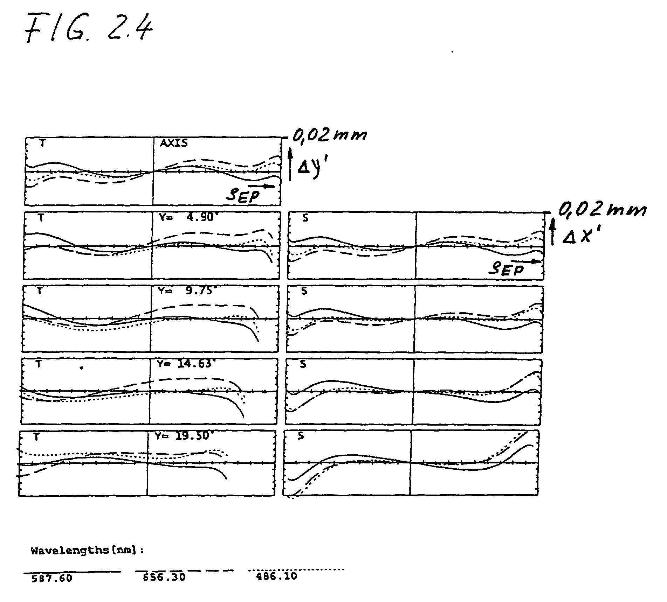

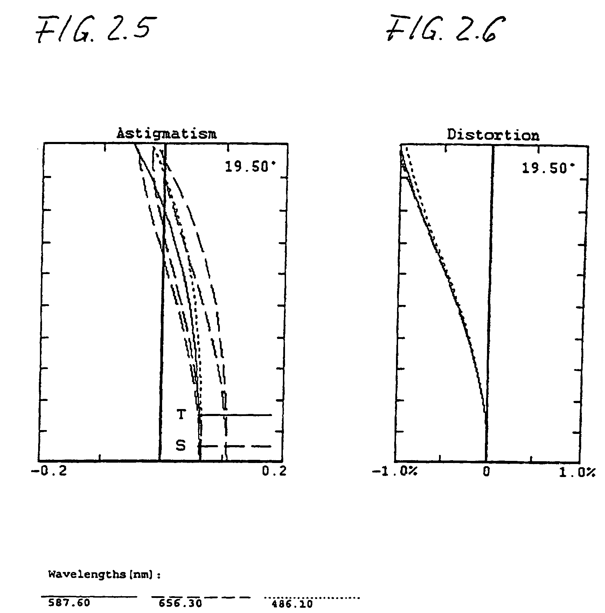

In den Figuren 2.1 bis 2.6 wird das lichtstarke Projektionsobjektiv mit gekrümmter Bildfläche nach Anspruch 4 in der gleichen Art und Weise beschrieben wie das in den Figuren 1.1 bis 1.6 der Fall gewesen.ist. Es wird gezeigt in den Figuren:
- 2.1a: Das Schnittbild des Systems mit der Numerierung der Linsen und der Stahlenverlauf in der meridionalen Ebene für die Abbildung verschiedener Objektpunkte. Die Blende ist zwischen den Linsen 5 und 6 angeordnet.
- 2.1b: Das Schnittbild des Systems mit dem Stahlenverlauf in der meridionalen Ebene für die Abbildung des äußersten Objektpunktes (Diagonale des Objektfeldes) und den charakteristischen Winkeln σRBa und σRBi mit den Werten: σRBa= 4,2° und σRBi=-17,7° für eine Eintrittspupillenlage von LEP=178,3mm.
- 2.2: entspricht Figur 1.2. Der minimale Wert der Vignettierung beträgt 77% bei einem halben Bildwinkel von w=wmax=19,5°.
- 2.3: entspricht Figur 1.3. Das in 1.3 gesagte trifft insbesondere auch für die Abbildungsqualität dieses Objektivs mit dem größeren halben Bildwinkel von w= wmax=19,5° zu.
- 2.4, 2.5 und 2.6: entsprechen den Figuren 1.4, 1.5 und 1.6 für einen halben Bildwinkel von w= wmax=19,5°, wobei das dort gesagte in vergleichbarere Weise auch auf diese Abbildungen zutrifft.

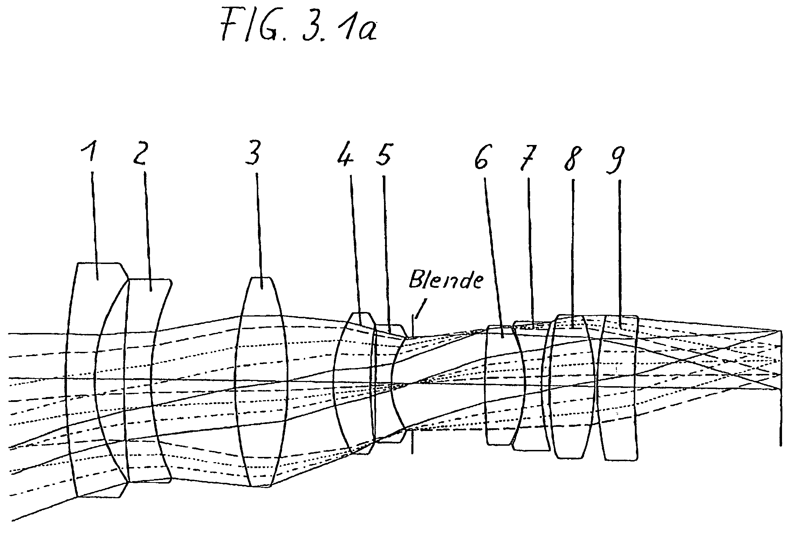

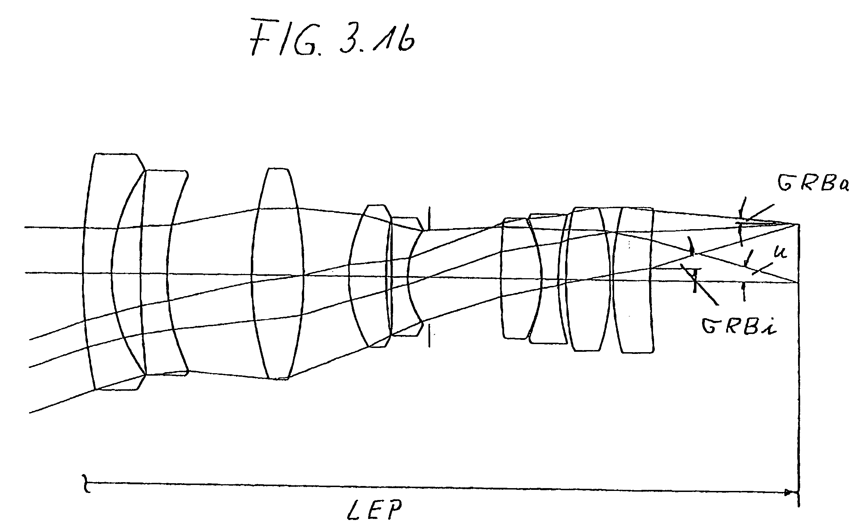

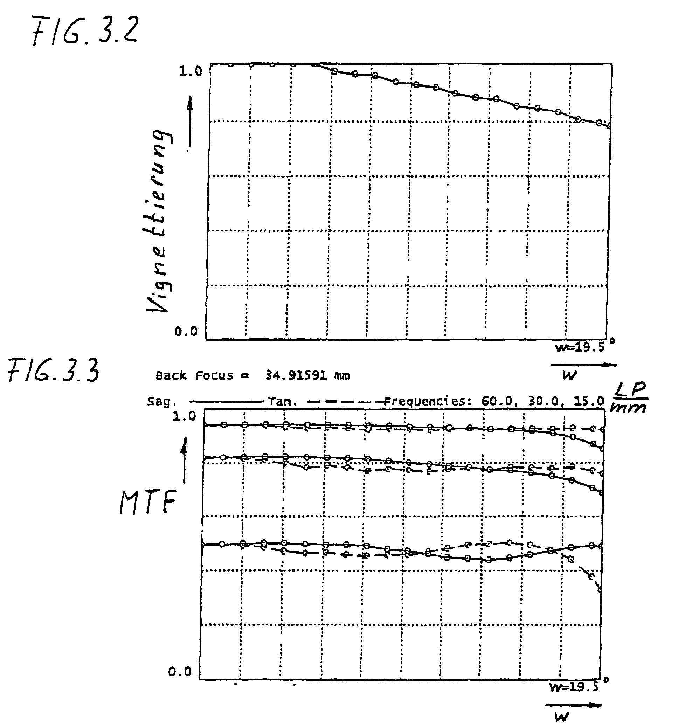

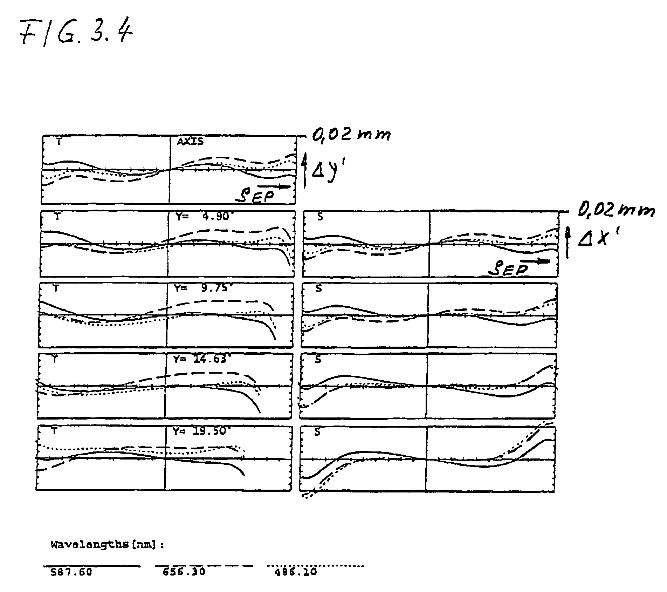

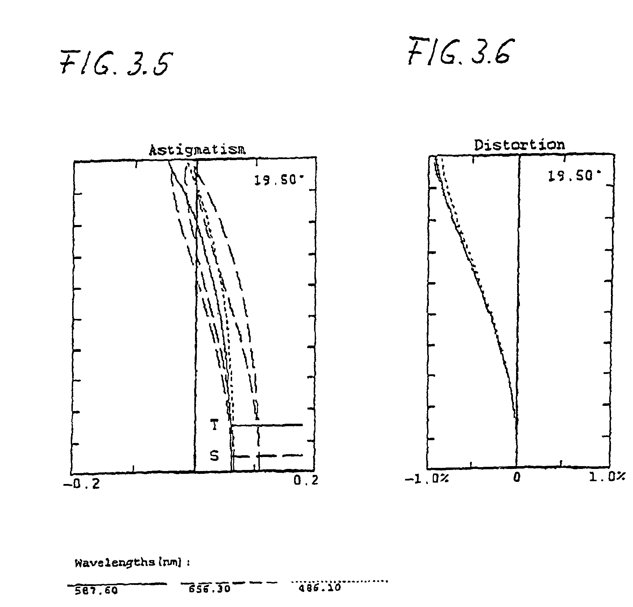

In den Figuren 3.1 bis 3.6 wir das lichtstarke Projektionsobjektiv mit ebener Bildfläche nach Anspruch 5 in der gleichen Art und Weise beschrieben wie das in den Figuren 2.1 bis 2.6 der Fall gewesen ist. Es wird gezeigt in den Figuren:
- 3.1a: Das Schnittbild des Systems mit der Numerierung der Linsen und der Stahlenverlauf in der mendionalen Ebene für die Abbildung verschiedener Objektpunkte. Die Blende ist zwischen den Linsen 5 und 6 angeordnet.
- 3.1b: Das Schnittbild des Systems mit dem Stahlenverlauf in der meridonalen Ebene für die Abbildung des äußersten Objektpunktes (Diagonale des Objektfeldes) und den charakteristischen Winkeln σRBa und σRBi mit den Werten: σRBα=4,2° und σRBi=17,7° für eine Eintrittspupillenlage von LEP= 176,6mm.
- 3.2: entspricht Figur 2.2. Der minimale Wert der Vignettierung beträgt 78% bei einem halben Bildwinkel von w=wmax=19,5°,
- 3.3: entspricht Figur 2.3. Beide Systeme gleicher Brennweite, die sich nur in der Krümmung der Bildflächen (gekrümmt und eben) unterscheiden, zeigen einen quasi identischen Kurvenverlauf der MTF und sind damit gleichwertig in der Abbildungsqualität.
- 3.4, 3.5 und 3.6: entsprechen den Figuren 2.4, 2.5 und 2.6 bei einem halben Bildwinkel von w=wmax=19,5°, wobei das dort gesagte in vergleichbare Weise auch für diese Abbildungen gilt.

Mit diesen Figuren 3.1 bis 3.6, die das System und alle Abbildungsfehler beschreiben, sollte insbesondere gezeigt werden, das diese in den obigen Ansprüchen formulierte Systemkonfiguration auch für ebene Bildflächen geeignet ist und das bei gleicher Abbildungsleistung unter Berücksichtigung aller Abbildungsfehler.

## Patentansprüche

1. Projektionsobjektiv, das aus neun beiderseits an Luft angrenzenden Linsen aufgebaut ist, **gekennzeichnet durch** folgende Bedingungen, die in ihrer Gesamtheit erfüllt sein müssen:
u ≥12,8°,
100mm ≤ LEP ≤ 400mm,
σRBa ≥ 1°,
σRBi ≤-14°,
wobei
u der Aperturwinkel beleuchtungsseitig.
LEP der Abstand der Eintrittspupille von der Objektebene, wobei die Lage in Projektionsrichtung vom Bezugspunkt Objektebene dem positivem Wert entspricht,
σRBa die Winkelneigung des Strahles gegenüber der optischen Achse im Objektraum zwischen Objekt und der den Objekt Zugewandten äußeren Linsenfläche des Objektivs, der das Bündel für den Feldrand nach außen hin begrenzt und
σRBi die Winkelneigung des Strahles gegenüber der optischen Achse im Objektraum zwischen Objekt und der dem objekt zugewandten äußeren Linsenfläche des Objektivs, der das Bündel für den Feldrand nach innen hin begrenzt, ist,
sowie die Winkel σRBa und σRBi positiv sind, wenn die entsprechenden Strahlen die optische Achse an einem Ort schneiden, der vom Objekt aus gesehen in entgegengesetzter Projektionsrichtung liegt und negativ, wenn sie die optische Achse an einem Ort schneiden, der vom Objekt aus gesehen in der Projektionsrichtung liegt,
mit folgender Anordnung der Linsen in der Reihenfolge vom Bild zum Objekt.
- eine erste negative, meniskenförmige Unse (1), mit der konvexen Fläche auf der Bildseite
- eine zweite negative, meniskenförmige Linse (2), mit der konvexen Fläche an der Bildseite,
- eine dritte positive Linse (3), mit einer konvexen Fläche auf der Objektseite,
- eine vierte positive, meniskusförmige Unse (4), mit einer konvexen Fläche an der Bildseite,
- eine fünfte negative Linse (5), mit einer konkaven Fläche auf der Objektseite,
- eine sechste bikonvexe Unse (6),
- eine siebte bikonkave Linse (7),
- eine achte positive Unse (8), mit einer konvexen Fläche an der Objektseite und
- eine neunte positive Linse (9), mit einer konvexen Fläche auf der Bildseite.

2. Projektionsobjektiv nach Anspruch 1, **gekennzeichnet durch** folgende Daten der Linsen (1 bis 9):
**Tabelle 1**
| Linsen- Nr. | Flächen- Nr. | Radien | Dicken und Abstände | Brechzahlen | Abbesche Zahlen |
|---|---|---|---|---|---|
| J | i | ri/f' | di/f' | nd | vd |
| | 1 | 1,64<ri/f'<6,14 | - | 1,0000 | ― |
| 1 | 2 | 0,64<ri/f'<2,26 | 0,10<di/f'<0,44 | > 1,48 | >50 |
| | 3 | 2,53<ri/f'<21,9 | 0,10<di/f'<0,53 | 1,0000 | ― |
| 2 | 4 | 0,92<ri/f'<3,30 | 0,08<di/f'<0,40 | > 1,48 | > 50 |
| | 5 | 1,04<ri/f'≤∞ -∞≤ri/f'<-7,05 | 0,20<di/f'<2,22 | 1,0000 | ― |
| 3 | 6 | -3,20<ri/f'<-1,36 | 0,16<di/f'<0,71 | > 1,58 | > 35 |
| | 7 | 0,52<ri/f'<2,15 | 0,002<di/f'<2,00 | 1,0000 | ― |
| 4 | 8 | 1,44<ri/f'<28,5 | 0,14<di/f'<0,62 | > 1,60 | > 37 |
| | 9 | 10,0<ri/f'≤∞ -∞≤ri/f'<-1,72 | 0,012<di/f'<0,53 | 1,0000 | ― |
| 5 | 10 | 0,31<ri/f'<1,20 | 0,036<di/f'<0,36 | > 1,50 | < 55 |
| | 11 | 0,99<ri/f'<5,40 | 0,04<di/f'<1,33 | 1,0000 | ― |
| 6 | 12 | -2,15<ri/f'<-0,50 | 0,14<di/f'<0,67 | > 1,60 | > 37 |
| | 13 | -1,75<ri/f'<-0,53 | 0,001<di/f'<0,71 | 1,0000 | ― |
| 7 | 14 | 0,76<ri/f'<3,17 | 0,03<di/f'<0,40 | > 1,60 | < 40 |
| | 15 | 1,12<ri/f'≤∞ -∞≤ri/f'<-32 | 0,004<di/f'<0,44 | 1,0000 | |
| 8 | 16 | -1,88<ri/f'<-0,76 | 0,12<di/f'<0,67 | > 1,58 | > 45 |
| | 17 | 0,79<ri/f'<3,99 | 0,002<di/f'<0,53 | 1,0000 | ― |
| 9 | 18 | 1,32<ri/f'≤∞ -∞≤ri/f'<-1,79 | 0,12<di/f'<0,67 | > 1,58 | > 45 |
| und f' die Brennweite des Systems in mm, j die Nummer der Linsen, i die Nummer der brechenden Fläche, ri der Radius der i-ten brechenden Fläche in mm, di der Scheitelpunkts-Abstand zwischen den Flächen i und i-1 in mm, nd die Brechzahl des Glases für die d-Linie und νd die Abbesche Zahl des Glases für die d-Linie bedeuten. | | | | | |

3. Projektionsobjektiv nach Anspruch 1 oder 2, **gekennzeichnet durch** folgende Daten der Linsen (1 bis 9):
**Tabelle 2**
| Linsen-Nr. | Flächen-Nr. | Radien | Dicken und Abstände | Brechzahlen | Abbesche Zahlen |
|---|---|---|---|---|---|
| J | i | ri | Di | nd | vd |
| | 1 | 122693 | -- | 1,0000 | -- |
| 1 | 2 | 36,880 | 5,982 | 1,51633 | 64,12 |
| | 3 | 199,620 | 7,186 | 1,0000 | -- |
| 2 | 4 | 79,490 | 5,990 | 1,51633 | 64,12 |
| | 5 | 63,191 | 14,491 | 1,0000 | -- |
| 3 | 6 | -86,796 | 12,851 | 1,65159 | 58,53 |
| | 7 | 30,487 | 2,267 | 1,0000 | -- |
| 4 | 8 | 72,451 | 9,031 | 1,72915 | 54,66 |
| | 9 | 773,151 | 4,593 | 1,0000 | -- |
| 5 | 10 | 17,137 | 2,995 | 1,61293 | 36,98 |
| | | Blende | 5,478 | 1,0000 | -- |
| | 11 | 179,965 | 15,990 | 1,0000 | ― |
| 6 | 12 | -25,281 | 9,649 | 1,65159 | 58,53 |
| | 13 | -27,786 | 0,160 | 1,0000 | ― |
| 7 | 14 | 52,714 | 2,975 | 1,62588 | 35,68 |
| | 15 | 70,421 | 1.519 | 1,0000 | ― |
| 8 | 16 | -40,057 | 10,584 | 1,60311 | 60,62 |
| | 17 | 57,554 | 0,174 | 1,0000 | -- |
| 9 | 18 | 205,974 | 10.853 | 1,60311 | 60,62 |
| f' = 45mm, | | | | | |
| s'=32,7mm (letzte Schnittweite für s=∞) | | | | | |
| Relative Öffnung: 1:1,9 | | | | | |
| Bildwinkel: 2w=34,8° | | | | | |
| gekrümmtes Objektfeld und j die Nummer der Linsen, i die Nummer der brechenden Fläche, ri der Radius der i-ten brechenden Fläche in mm, di der Scheitelpunkts-Abstand zwischen den Flächen i und i-1 in mm, nd die Brechzahl des Glases für die d-Linie und νd die Abbesche Zahl des Glases für die d-Linie bedeuten. | | | | | |

4. Projektionsobjektiv nach Anspruch 1 oder 2, **gekennzeichnet durch** folgende Daten der Linsen (1 bis 9):
**Tabelle 3**
| Linsen-Nr. | Flächen-Nr. | Radien | Dicken und Abstände | Brechzahlen | Abbesche Zahlen |
|---|---|---|---|---|---|
| J | i | ri | di | nd | vd |
| | 1 | 137.680 | -- | 1,0000 | -- |
| 1 | 2 | 41,020 | 7,000 | 1,51633 | 64,12 |
| | 3 | 260,054 | 7,069 | 1,0000 | ― |
| 2 | 4 | 54.856 | 6,500 | 1,51633 | 64,12 |
| | 5 | 78,528 | 19,854 | 1,0000 | ― |
| 3 | 6 | -80,224 | 13,000 | 1,65159 | 58,53 |
| | 7 | 31.339 | 11,971 | 1,0000 | -- |
| 4 | 8 | 90,962 | 9,500 | 1,72915 | 54,66 |
| | 9 | -1587,324 | 1,293 | 1,0000 | - |
| 5 | 10 | 18,526 | 4,000 | 1,56732 | 42,81 |
| | | Blende | 5,336 | 1,0000 | ― |
| | 11 | 136,010 | 17,679 | 1,0000 | ― |
| 6 | 12 | -29,021 | 10,000 | 1,72915 | 54,66 |
| | 13 | -32,146 | 0,093 | 1,0000 | ― |
| 7 | 14 | 51.817 | 4,000 | 1,66680 | 33,04 |
| | 15 | 71.486 | 0.814 | 1,0000 | ― |
| 8 | 16 | -45,788 | 11,000 | 1,60311 | 60,62 |
| | 17 | 64,776 | 1,837 | 1,0000 | -- |
| 9 | 18 | 358,885 | 9,000 | 1,60311 | 60,62 |
| f'= 40mm, | | | | | |
| s'=35.0mm (letzte Schnittweite für s=∞) | | | | | |
| Relative Öffnung: 1:1,9 | | | | | |
| Bildwinkel: 2w=39° | | | | | |
| gekrümmtes Objektfeld und j die Nummer der Linsen, i die Nummer der brechenden Fläche, ri der Radius der i-ten brechenden Fläche in mm, di der Scheitelpunkts-Abstand zwischen den Flächen i und i-1 in mm. nd die Brechzahl des Glases für die d-Unie und νd die Abbesche Zahl des Glases für die d-Linie bedeuten. | | | | | |

5. Projekfionsobektiv nach Anspruch 1 oder 2 **gekennzeichnet durch** folgende Daten der Linsen (1 bis 9):
**Tabelle 4**
| Linsen- Nr. | Flächen -Nr. | Radien | Dicken und Abstände | Brechzahlen | Abbesche Zahlen |
|---|---|---|---|---|---|
| j | i | ri | di | nd | vd |
| | 1 | 135,549 | ― | 1,0000 | ― |
| 1 | 2 | 40,596 | 7,000 | 1,51633 | 64,12 |
| | 3 | 222,537 | 6,956 | 1,0000 | ― |
| 2 | 4 | 53,985 | 6,500 | 1,51633 | 64,12 |
| | 5 | 78,774 | 20,642 | 1,0000 | ― |
| 3 | 6 | -79,537 | 13,000 | 1,65159 | 58,53 |
| | 7 | 30,776 | 11,353 | 1,0000 | ― |
| 4 | 8 | 87,075 | 9,500 | 1,72915 | 54,66 |
| | 9 | ∞ | 1,296 | 1,0000 | ― |
| 5 | 10 | 18,416 | 4,000 | 1,56732 | 42,81 |
| | 11 | Blende | 5,334 | 1,0000 | ― |
| | 12 | 147,728 | 17,769 | 1,0000 | ― |
| 6 | 13 | -28,893 | 10,000 | 1,72915 | 54,66 |
| | 14 | -32,267 | 0,114 | 1,0000 | ― |
| 7 | 15 | 53,439 | 4,000 | 1,68893 | 31,06 |
| | 16 | 81,611 | 1,898 | 1,0000 | ― |
| 8 | 17 | -51,483 | 11,000 | 1,72915 | 54,66 |
| | 18 | 67,997 | 0,580 | 1,0000 | ― |
| 9 | 19 | 156,001 | 9,000 | 1,72915 | 54,66 |
| f'=40mm, | | | | | |
| s'=34,9mm (letzte Schnittweite für s=∞) | | | | | |
| Relative Öffnung; 1:1,9 | | | | | |
| Bildwinkel: 2w=39° | | | | | |
| ebenes Objektfeld und j die Nummer der Linsen, i die Nummer der brechenden Fläche, ri der Radius der i-ten brechenden Fläche in mm, di der Scheitelpunkts-Abstand zwischen den Flächen i und i-1 in mm. nd die Brechzahl des Glases für die d-Linie und vd die Abbesche Zahl des Glases für die d-Linie bedeuten. | | | | | |

## Claims

1. Projection lens system constructed from nine lenses bordered on both sides by air, **characterised in that** the following conditions must be fulfilled in their entirety:
u ≥ 12.8°,
100 mm ≤ LEP ≤ 400 mm,
σRBa ≥ 1°,
σRBi ≤ -14°,
where
u is the aperture angle on the illumination side,
LEP is the separation of the entrance pupil from the object plane, whereby the position in the projection direction from the reference point of the object plane corresponds to a positive value,
σRBa is the inclination angle of the beam relative to the optical axis in the object space between the object and the outer lens surface of the lens system facing towards the object which delimits the beam towards the outside for the field edge, and
σRBi is the inclination angle of the beam relative to the optical axis in the object space between the object and the outer lens surface of the lens system facing towards the object which delimits the beam towards the inside for the field edge,
and the angles σRBa and σRBi are positive when the relevant beams cut the optical axis at a point which, seen from the object position, lies opposed to the projection direction and are negative when they cut the optical axis at a point which, seen from the object position, lies in the projection direction,
with the following arrangement of the lenses in sequence from the image to the object:
- a first negative, meniscus-shaped lens (1) with its convex surface towards the image side,
- a second negative, meniscus-shaped lens (2) with its convex surface towards the image side,
- a third positive lens (3) with a convex surface towards the object side,
- a fourth positive, meniscus-shaped lens (4) with a convex surface towards the image side,
- a fifth negative lens (5) with a concave surface towards the object side,
- a sixth biconvex lens (6),
- a seventh biconcave lens (7),
- an eighth positive lens (8), with a convex surface towards the image side, and
- a ninth positive lens (9) with a convex surface towards the image side.

2. Projection lens system according to Claim 1, **characterised in that** the following data for the lenses (1 to 9) apply:
**Table 1**
| Lens No. | Surface No. | Radii | Thicknesses and separations | Refractive indices | Abbe Nos. |
|---|---|---|---|---|---|
| j | i | ri/f' | di/f' | nd | vd |
| | 1 | 1.64<ri/f'<6.14 | - - | 1.0000 | - - |
| 1 | 2 | 0.64<ri/f'<2.26 | 0.10<di/f'<0.44 | >1.48 | >50 |
| | 3 | 2.53<ri/f'<21.9 | 0.10<di/f'<0.53 | 1.0000 | - - |
| 2 | 4 | 0.92<ri/f'<3.30 | 0.08<di/f'<0.40 | >1.48 | >50 |
| | 5 | 1.04<ri/f'≤∞ | 0.20<di/f'<2.22 | 1.0000 | - - |
| | | -∞≤ri/f'<-7.05 | | | |
| 3 | 6 | -3.20<ri/f'<- | 0.16<di/f'<0.71 | >1.58 | >35 |
| | 7 | 1.36 | 0.002<di/f'<2.00 | 1.0000 | - - |
| | | 0.52<ri/f'<2.15 | | | |
| 4 | 8 | 1.44<ri/f'<28.5 | 0.14<di/f'<0.62 | >1.60 | >37 |
| | 9 | 10.0<ri/f'≤∞ | 0.012<di/f'<0.53 | 1.0000 | - - |
| | | -∞≤ri/f'<-1.72 | | | |
| 5 | 10 | 0.31<ri/f'<1.20 | 0.036<di/f'<0.36 | >1.50 | >55 |
| | 11 | 0.99<ri/f'<5.40 | 0.04<di/f'<1.33 | 1.0000 | - - |
| 6 | 12 | -2.15<ri/f'<- | 0.14<di/f'<0.67 | >1.60 | >37 |
| | 13 | 0.50 | 0.001<di/f'<0.71 | 1.0000 | - - |
| | | - 1.75<ri/f'<- | | | |
| | | 0.53 | | | |
| 7 | 14 | 0.76<ri/f'<3.17 | 0.03<di/f'<0.40 | >1.60 | <40 |
| | 15 | 1.12<ri/f'≤∞ | 0.004<di/f'<0.44 | 1.0000 | |
| | | -∞≤ri/f'<-32 | | | |
| 8 | 16 | -1.88<ri/f'<- | 0.12<di/f'<0.67 | >1.58 | >45 |
| | 17 | 0.76 | 0.002<di/f'<0.53 | 1.0000 | - - |
| | | 0.79<ri/f'<3.99 | | | |
| 9 | 18 | 1.32<ri/f'≤∞ | 0.12<di/f'<0.67 | >1.58 | >45 |
| | | -∞≤ri/f'<-1.79 | | | |
| where | | | | | |
| f' is the focal length of the system in mm, | | | | | |
| j is the number of the lens, | | | | | |
| i is the number of the refracting surface, | | | | | |
| ri is the radius of the ith refracting surface in mm, | | | | | |
| di is the vertex separation between the surfaces i and i-1 in mm, | | | | | |
| nd is the refractive index of the glass for the d-line and | | | | | |
| vd is the Abbe number of the glass for the d-line. | | | | | |

3. Projection lens system according to Claim 1 or 2, **characterised in that** the following data for the lenses (1 to 9) apply:
**Table 2**
| Lens No. | Surfac e No. | Radii | Thicknesses and separations | Refractiv e indices | Abbe Nos. |
|---|---|---|---|---|---|
| j | i | ri | Di | nd | vd |
| | 1 | 122.693 | - - | 1.0000 | - - |
| 1 | 2 | 36.880 | 5.982 | 1.51633 | 64.12 |
| | 3 | 199.620 | 7.186 | 1.0000 | - - |
| 2 | 4 | 79.490 | 5.990 | 1.51633 | 64.12 |
| | 5 | 63.191 | 14.491 | 1.0000 | - - |
| 3 | 6 | -86.796 | 12.851 | 1.65159 | 58.53 |
| | 7 | 30.487 | 2.267 | 1.00000 | - - |
| 4 | 8 | 72.451 | 9.031 | 1.72915 | 54.66 |
| | 9 | 773.151 | 4.593 | 1.0000 | - - |
| 5 | 10 | 17.137 | 2.995 | 1.61293 | 36.98 |
| | | Stop | 5.478 | 1.0000 | - - |
| | 11 | 179.965 | 15.990 | 1.0000 | - - |
| 6 | 12 | -25.281 | 9.649 | 1.65159 | 58.53 |
| | 13 | -27.786 | 0.160 | 1.0000 | - - |
| 7 | 14 | 52.714 | 2.975 | 1.62588 | 35.68 |
| | 15 | 70.421 | 1.519 | 1.0000 | - - |
| 8 | 16 | -40.057 | 10.584 | 1.60311 | 60.62 |
| | 17 | 57.554 | 0.174 | 1.0000 | - - |
| 9 | 18 | 205.974 | 10.853 | 1.60311 | 60.62 |
| where | | | | | |
| f' = 45 mm, | | | | | |
| s' = 32.7 mm (last vertex focal length for s = ∞) | | | | | |
| Aperture ratio: 1:1.9 | | | | | |
| Viewing angle: 2w = 34.8° | | | | | |
| Curved object field | | | | | |
| and j is the number of the lens, i is the number of the refracting surface, ri is the radius of the ith refracting surface in mm, di is the vertex separation between the surfaces i and i-1 in mm, nd is refractive index of the glass for the d-line and vd is the Abbe number of the glass for the d-line. | | | | | |

4. Projection lens system according to Claim 1 or 2, **characterised in that** the following data for the lenses (1 to 9) apply:
**Table 3**
| Lens No. | Surface No. | Radii | Thicknesses and separations | Refractiv e indices | Abbe Nos. |
|---|---|---|---|---|---|
| j | i | ri | di | nd | vd |
| 1 | 1 | 137.680 | - - | 1.0000 | - - |
| | 2 | 41.020 | 7.000 | 1.51633 | 64.12 |
| | 3 | 260.054 | 7.069 | 1.0000 | - - |
| 2 | 4 | 54.856 | 6.500 | 1.51633 | 64.12 |
| | 5 | 78.528 | 19.854 | 1.0000 | - - |
| 3 | 6 | -80.224 | 13.000 | 1.65159 | 58.53 |
| | 7 | 31.339 | 11.971 | 1.00000 | - - |
| 4 | 8 | 90.962 | 9.500 | 1.72915 | 54.66 |
| | 9 | -1587.324 | 1.293 | 1.0000 | - - |
| 5 | 10 | 18.526 | 4.000 | 1.56732 | 42.81 |
| | | Stop | 5.336 | 1.0000 | - - |
| | 11 | 136.010 | 17.679 | 1.0000 | - - |
| 6 | 12 | -29.021 | 10.000 | 1.72915 | 54.66 |
| | 13 | -32.146 | 0.093 | 1.0000 | - - |
| 7 | 14 | 51.817 | 4.000 | 1.66680 | 33.04 |
| | 15 | 71.486 | 0.814 | 1.0000 | - - |
| 8 | 16 | -45.788 | 11.000 | 1.60311 | 60.62 |
| | 17 | 64.776 | 1.837 | 1.0000 | - - |
| 9 | 18 | 358.885 | 9.000 | 1.60311 | 60.62 |
| where | | | | | |
| f' = 40 mm, | | | | | |
| s' = 35.0 mm (last vertex focal length for s = ∞) | | | | | |
| Aperture ratio: 1:1.9 | | | | | |
| Viewing angle: 2w = 39° | | | | | |
| Curved object field | | | | | |
| and j is the number of the lens, i is the number of the refracting surface, ri is the radius of the ith refracting surface in mm, di is the vertex separation between the surfaces i and i-1 in mm, nd is refractive index of the glass for the d-line and vd is the Abbe number of the glass for the d-line. | | | | | |

5. Projection lens system according to Claim 1 or 2, **characterised in that** the following data for the lenses (1 to 9) apply:
**Table 4**
| Lens No. | Surface No. | Radii | Thicknesses and separations | Refractive indices | Abbe Nos. |
|---|---|---|---|---|---|
| j | i | ri | di | nd | vd |
| | 1 | 135.549 | - - | 1.0000 | - - |
| 1 | 2 | 40.596 | 7.000 | 1.51633 | 64.12 |
| | 3 | 222.537 | 6.956 | 1.0000 | - - |
| 2 | 4 | 53.985 | 6.500 | 1.51633 | 64.12 |
| | 5 | 78.774 | 20.642 | 1.0000 | - - |
| 3 | 6 | -79.537 | 13.000 | 1.65159 | 58.53 |
| | 7 | 30.776 | 11.353 | 1.00000 | - - |
| 4 | 8 | 87.075 | 9.500 | 1.72915 | 54.66 |
| | 9 | ∞ | 1.296 | 1.0000 | - - |
| 5 | 10 | 18.416 | 4.000 | 1.56732 | 42.81 |
| | | Stop | 5.334 | 1.0000 | - - |
| | 11 | 147.728 | 17.769 | 1.0000 | - - |
| 6 | 12 | -28.893 | 10.000 | 1.72915 | 54.66 |
| | 13 | -32.267 | 0.114 | 1.0000 | - - |
| 7 | 14 | 53.439 | 4.000 | 1.68893 | 31.06 |
| | 15 | 81.611 | 1.898 | 1.0000 | - - |
| 8 | 16 | -51.483 | 11.000 | 1.72915 | 54.66 |
| | 17 | 67.997 | 0.580 | 1.0000 | - - |
| 9 | 18 | 156.001 | 9.000 | 1.72915 | 54.66 |
| where | | | | | |
| f' = 40 mm, | | | | | |
| s' = 34.9 mm (last vertex focal length for s = ∞) | | | | | |
| Aperture ratio: 1:1.9 | | | | | |
| Viewing angle: 2w = 39° | | | | | |
| Flat object field | | | | | |
| and j is the number of the lens, i is the number of the refracting surface, ri is the radius of the ith refracting surface in mm, di is the vertex separation between the surfaces i and i-1 in mm, nd is refractive index of the glass for the d-line and vd is the Abbe number of the glass for the d-line. | | | | | |

## Revendications

1. Objectif de projection composé de neuf lentilles adjacentes à l'air des deux côtés,
**caractérisé par**
les conditions suivantes qui doivent être respectées dans leur ensemble :
u ≥ 12,8°,
100 mm ≤ LEP ≤ 400 mm,
σRBa ≥ 1°,
σRBi ≥ -14° ;
dans lequel
u représente l'angle d'ouverture du côté de l'éclairage,
LEP représente la distance entre la pupille d'entrée et le plan de l'objet, la position dans la direction de projection du point de référence et du plan de l'objet correspondant à la valeur positive,
σRBa représente l'inclinaison du faisceau par rapport à l'axe optique dans l'espace de l'objet entre l'objet et la surface de lentille externe de l'objectif tournée vers l'objet, objectif qui limite le faisceau pour le bord du champ vers l'extérieur, et
σRBi représente l'inclinaison du faisceau par rapport à l'axe optique dans l'espace de l'objet entre l'objet et la surface de lentille externe de l'objectif tournée vers l'objet, objectif qui limite le faisceau pour le bord du champ vers l'intérieur,
et les angles σRBa et σRBi sont positifs lorsque les faisceaux correspondants coupent l'axe optique en un endroit qui est, en regardant à partir de l'objet, en direction de projection contraire et négatif lorsqu'ils coupent l'axe optique en un endroit qui est dans la direction de projection, en regardant à partir de l'objet,
avec l'agencement suivant des lentilles dans la séquence de l'image à l'objet :
- une première lentille négative en forme de ménisque (1), avec la surface convexe sur le côté de l'image,
- une seconde lentille négative en forme de ménisque (2), avec la surface convexe dans le côté de l'image,
- une troisième lentille positive (3), avec une surface convexe sur le côté de l'objet,
- une quatrième lentille positive en forme de ménisque (4), avec une surface convexe dans le côté de l'image,
- une cinquième lentille négative (5), avec une surface concave sur le côté de l'objet,
- une sixième lentille biconvexe (6),
- une septième lentille biconcave (7),
- une huitième lentille positive (8), avec une surface convexe dans le côté de l'objet, et
- une neuvième lentille positive (4), avec une surface convexe sur le côté de l'image.

2. Objectif de projection selon la revendication 1,
**caractérisé par**
les informations suivantes sur les lentilles (1 à 9) :
**Tableau 1**
| Lentille n° | Surface n° | Rayons | Épaisseurs et distances | Indices de réfraction | Nombres d'Abbe |
|---|---|---|---|---|---|
| j | i | ri/f' | di/f' | nd | vd |
| | 1 | 1,64 < ri/f' < 6,14 | - | 1,0000 | - |
| 1 | 2 | 0,64 < ri/f' < 2,26 | 0,10 < di/f' < 0,44 | > 1,48 | > 50 |
| | 3 | 2,53 < ri/f' < 21,9 | 0,10 < di/f' < 0,53 | 1,0000 | - |
| 2 | 4 | 0,92 < ri/f' < 3,30 | 0,08 < di/f' < 0,40 | > 1,48 | > 50 |
| | 5 | 1,04 < ri/f' ≤ ∞ -∞ ≤ ri/f' < -7,05 | 0,20 < di/f' < 2,22 | 1,0000 | - |
| 3 | 6 | -3,20 < ri/f' < -1,36 | 0,16 < di/f' < 0,71 | > 1,58 | > 35 |
| | 7 | 0,52 < ri/f' < 2,15 | 0,002 < di/f' < 2,00 | 1,0000 | - |
| 4 | 8 | 1,44 < ri/f' < 28,5 | 0,14 < di/f' < 0,62 | > 1,60 | > 37 |
| | 9 | 10,0 < ri/f' ≤ ∞ -∞ ≤ ri/f' < -1,72 | 0,012 < di/f' < 0,53 | 1,0000 | - |
| 5 | 10 | 0,31 < ri/f' < 1,20 | 0,036 < di/f' < 0,36 | > 1,50 | < 55 |
| | 11 | 0,99 < ri/f' < 5,40 | 0,04 < di/f' < 1,33 | 1,0000 | - |
| 6 | 12 | -2,15 < ri/f' < -0,50 | 0,14 < di/f' < 0,67 | > 1,60 | > 37 |
| | 13 | -1,75 < ri/f' < -0,53 | 0,001 < di/f' < 0,71 | 1,0000 | - |
| 7 | 14 | 0,76 < ri/f' < 3,17 | 0,03 < di/f' < 0,40 | > 1,60 | < 40 |
| | 15 | 1,12 < ri/f' ≤ ∞ -∞ ≤ ri/f' < -32 | 0,004 < di/f' < 0,44 | 1,0000 | |
| 8 | 16 | -1 88 < ri/f < -0,76 | 0, 12 < di/f' < 0,67 | > 1,58 | > 45 |
| | 17 | 0,79 < ri/f' < 3,99 | 0,002 < di/f' < 0,53 | 1,0000 | - |
| 9 | 18 | 1,32 < ri/f ≤ ∞ -∞ ≤ ri/f' < -1,79 | 0,12 < di/f' < 0,67 | > 1,58 | >45 |
| et f' représente la distance focale du système en mm, j représente le numéro de lentille, i représente le numéro de la surface de réfraction, ri représente le rayon de l'énième surface de réfraction i en mm, di représente la distance du point culminant entre les surfaces i et i-1 en mm, nd représente l'indice de réfraction du verre pour la ligne d et vd représente le nombre d'Abbe du verre pour la ligne d. | | | | | |

3. Objectif de projection selon la revendication 1 ou 2,
**caractérisé par**
les informations suivantes sur les lentilles (1 à 9) :
**Tableau 2**
| Lentille n° | Surface n° | Rayons | Épaisseurs et distances | Indices de réfraction | Nombres d'Abbe |
|---|---|---|---|---|---|
| j | i | ri | di | Nd | vd |
| | 1 | 122,693 | - | 1,0000 | - |
| 1 | 2 | 36,880 | 5,982 | 1,51633 | 64,12 |
| | 3 | 199,620 | 7,186 | 1,0000 | - |
| 2 | 4 | 79,490 | 5,990 | 1,51633 | 64,12 |
| | 5 | 63,191 | 14,491 | 1,0000 | - |
| 3 | 6 | -86,796 | 12,851 | 1,65159 | 58,53 |
| | 7 | 30,487 | 2,267 | 1,0000 | - |
| 4 | 8 | 72,451 | 9,031 | 1,72915 | 54,66 |
| | 9 | 773,151 | 4,593 | 1,0000 | - |
| 5 | 10 | 17,137 | 2,995 | 1,61293 | 36,98 |
| | | Diaphragme | 5,478 | 1,0000 | - |
| | 11 | 179,965 | 15,990 | 1,0000 | - |
| 6 | 12 | -25,281 | 9,649 | 1,65159 | 58,53 |
| | 13 | -27,786 | 0,160 | 1,0000 | - |
| 7 | 14 | 52,714 | 2,975 | 1,62588 | 35,68 |
| | 15 | 70,421 | 1,519 | 1,0000 | - |
| 8 | 16 | -40,057 | 10,584 | 1,60311 | 60,62 |
| | 17 | 57,554 | 0,174 | 1,0000 | - |
| 9 | 18 | 205,974 | 10,853 | 1,60311 | 60,62 |
| f' = 45 mm | | | | | |
| s' = 32,7 mm (dernière amplitude en coupe pour s = ∞) | | | | | |
| ouverture relative : 1 :1,9 | | | | | |
| angle de vue : 2w = 34,8° | | | | | |
| champ d'objet courbé et j représente le numéro de lentille, i représente le numéro de la surface de réfraction, ri représente le rayon de l'énième surface de réfraction i en mm, di représente la distance du point culminant entre les surfaces i et i-1 en mm, nd représente l'indice de réfraction du verre pour la ligne d et vd représente le nombre d'Abbe du verre pour'la ligne d. | | | | | |

4. Objectif de projection selon la revendication 1 ou 2,
**caractérisé par**
les informations suivantes sur les lentilles (1 à 9):
**Tableau 3**
| Lentille n° | Surface n° | Rayons | Épaisseurs et distances | Indices de réfraction | Nombres d'Abbe |
|---|---|---|---|---|---|
| j | i | ri | di | nd | vd |
| | 1 | 137,680 | - | 1,0000 | - |
| 1 | 2 | 41,020 | 7,000 | 1,51633 | 64,12 |
| | 3 | 260,054 | 7,069 | 1,0000 | - |
| 2 | 4 | 54,856 | 6,500 | 1,51633 | 64,12 |
| | 5 | 78,528 | 19,854 | 1,0000 | - |
| 3 | 6 | -80,224 | 13,000 | 1,65159 | 58,53 |
| | 7 | 31,339 | 11,971 | 1,0000 | - |
| 4 | 8 | 90,962 | 9,500 | 1,72915 | 54,66 |
| | 9 | -1587,324 | 1,293 | 1,0000 | - |
| 5 | 10 | 18,526 | 4,000 | 1,56732 | 42,81 |
| | | Diaphragme | 5,336 | 1,0000 | - |
| | 11 | 136,010 | 17,679 | 1,0000 | - |
| 6 | 12 | -29,021 | 10,000 | 1,72915 | 54,66 |
| | 13 | -32,146 | 0,093 | 1,0000 | - |
| 7 | 14 | 51,817 | 4,000 | 1,66680 | 33,04 |
| | 15 | 71,486 | 0,814 | 1,0000 | - |
| 8 | 16 | -45,788 | 11,000 | 1,60311 | 60,62 |
| | 17 | 64,776 | 1,837 | 1,0000 | - |
| 9 | 18 | 358,885 | 9,000 | 1,60311 | 60,62 |
| f' = 40 mm | | | | | |
| s' = 35,0 mm (dernière amplitude en coupe pour s = ∞) | | | | | |
| ouverture relative : 1 :1,9 | | | | | |
| angle de vue : 2w = 39° | | | | | |
| champ d'objet courbé et j représente le numéro de lentille, i représente le numéro de la surface de réfraction, ri représente le rayon de l'énième surface de réfraction i en mm, di représente la distance du point culminant entre les surfaces i et i-1 en mm, nd représente l'indice de réfraction du verre pour la ligne d et vd représente le nombre d'Abbe du verre pour la ligne d. | | | | | |

5. Objectif de projection selon la revendication 1 ou 2,
**caractérisé par**
les informations suivantes sur les lentilles ( 1 à 9) :
**Tableau 4**
| Lentille n° | Surface n° | Rayons | Épaisseurs et distances | Indices de réfraction | Nombres d'Abbe |
|---|---|---|---|---|---|
| j | i | ri | di | nd | vd |
| | 1 | 135,549 | - | 1,0000 | - |
| 1 | 2 | 40,596 | 7,000 | 1,51633 | 64,12 |
| | 3 | 222,537 | 6,956 | 1,0000 | - |
| 2 | 4 | 53,985 | 6,500 | 1,51633 | 64,12 |
| | 5 | 78,774 | 20,642 | 1,0000 | - |
| 3 | 6 | -79,537 | 13,000 | 1,65159 | 58,53 |
| | 7 | 30,776 | 11,353 | 1,0000 | - |
| 4 | 8 | 87,075 | 9,500 | 1,72915 | 54,66 |
| | 9 | ∞ | 1,296 | 1,0000 | - |
| 5 | 10 | 18,416 | 4,000 | 1,56732 | 42,81 |
| | | Diaphragme | 5,334 | 1,0000 | - |
| | 11 | 147,728 | 17,769 | 1,0000 | - |
| 6 | 12 | -28,893 | 10,000 | 1,72915 | 54,66 |
| | 13 | -32,267 | 0,114 | 1,0000 | - |
| 7 | 14 | 53,439 | 4,000 | 1,66693 | 31,06 |
| | 15 | 81,611 | 1,898 | 1,0000 | - |
| 8 | 16 | -51,483 | 11,000 | 1,72915 | 54,66 |
| | 17 | 67,997 | 0,580 | 1,0000 | - |
| 9 | 18 | 156,001 | 9,000 | 1,72915 | 54,66 |
| f' = 40 mm | | | | | |
| s' = 34,9 mm (dernière amplitude en coupe pour s = ∞) | | | | | |
| ouverture relative : 1 :1,9 | | | | | |
| angle de vue : 2w = 39° | | | | | |
| champ d'objet plan et j représente le numéro de lentille, i représente le numéro de la surface de réfraction, ri représente le rayon de l'énième surface de réfraction i en mm, di représente la distance du point culminant entre les surfaces i et i-1 en mm, nd représente l'indice de réfraction du verre pour la ligne d et vd représente le nombre d'Abbe du verre pour la ligne d. | | | | | |
